# EUROPÄISCHE PATENTSCHRIFT

(11) **EP 1 169 946 B1**
(45) Veröffentlichungstag und Bekanntmachung des Hinweises auf die Patenterteilung: **01.09.2004**
(21) Anmeldenummer: 01114923.4
(22) Anmeldetag: 20.06.2001
(51) Int. Cl.: A47B 96/14, A47B 57/34, F16B 12/38, F16B 12/50

(54) **Profile und Verbindungssystem für die Zusammensetzung von tragenden Strukturen**
Beam and connection system for the assembly of load bearing structures
Profilé et système d'accouplement pour l'assemblage de structures portant une charge

(30) Priorität: 30.06.2000 IT BZ000030
(43) Veröffentlichungstag der Anmeldung: 09.01.2002
(73) Patentinhaber: Borz, Fabio, 38068 Rovereto (Trento) (IT)
(72) Erfinder: Borz, Fabio, 38068 Rovereto (Tn) (IT)
(74) Vertreter: Oberosler, Ludwig

(56) Entgegenhaltungen:
- AT-B- 303 295
- FR-A- 2 164 048
- FR-A- 2 568 668
- US-A- 4 230 052
- US-A- 4 582 001

## Beschreibung

Es sind Strukturen für Lagerregale bekannt welche durch modulartigem Zusammenbau von Profilen geschaffen werden, dabei werden Strukturelemente mit geschlossenem Querschnitt und/oder mit rohrförmig zusammengesetztem Querschnitt eingesetzt welche keine Bohrungen oder Bohrungen nur an den Endbereichen aufweisen welche von Verbindungselementen abgedeckt werden und ein einfaches und zeitsparendes Befestigungssystem emöglichen welches Gegenstand der IT-Patentanmeldung Nr. BZ000A000015 des selben Antragstellers ist. An diesen Strukturelementen ist bereits die Nutzung von Einbuchtungen und/oder von Stanzausformungen erwähnt, welche an allen oder nur an einem Teil der Außenflächen der Profile vorgesehen sind um, während der Befestigung oder Verbindung zwischen den Strukturelementen, eine Verspannung zu nutzen welche durch die Zusammenwirkung zwischen den schrägen Flächen der Einbuchtungen oder der Stanzausformungen mit jenen der Senkköpfe der Befestigungsmittel entsteht. Die Verbindungen zwischen den Strukturelementen um eine tragende Struktur gemäß den in besagter Anmeldung angeführten Anweisungen herzustellen, erfolgen durch den Einsatz verschiedener Verbindungs- und Befestigungselemente.

Die Erfindung stellt sich die Aufgabe obgenanntes Verbindungssystem für den modulartigen Zusammenbau von Lagerregalen oder von tragenden Strukturen allgemein so zu verbessern, daß die Verbindungselemente für den Großteil der Vebindungen überflüssig sind, wobei die Modularität beibehalten wird und die modulartige Verstellung der Verbindungspositionen vereinfacht wird. Die Erfindung sieht weiters die volle Kompatibilität mit dem bekannten in obgenannter Anmeldung beschriebenen System vor, welches von Verbindungselementen Gebrauch macht und so die Erfüllung besonderer Ansprüche, was den Zusammenbau der Struktur betrifft, ermöglicht.

Zur Lösung dieser Aufgabe schlägt die Erfindung den Einsatz von U-förmigen Profilen vor welche so miteinander kombiniert werden können, daß die Flanschen des einen Profils zwischen den Flanschen des anderen aufgenommen werden um so ein rohrförmiges Strukturelement mit quadratischem oder rechteckigem Querschnitt zu bilden. Die beiden zusammengesteckten Profile werden durch die Wirkung von, unter sich gleich beabstandeten, Einbuchtungen welche entlang der Längsachse der Flanschen beider U-Profile vorgesehen sind und nach innen vorstehen, zusammengehalten. Die Kraft mit welcher sich ein Profil am anderen festklammert ist durch die Serie von Einbuchtungen an den zwei Flanschen des äußeren Profils sichergestellt, diese dringen nämlich in zusammengesteckter Position der Profile in die mit der rückseitigen Ausformung der Einbuchtungen an den Flanschen des inneren Profils ein. Der selbe Klammereffekt ist auch erreichbar indem an den Flanschen des inneren Profils, an Stelle der Einbuchtungen, Bohrungen vorgesehen werden deren Durchmesser dem größeren Durchmesser der rückseitigen Ausformungen der Einbuchtungen entspricht. Erfindungsgmäß können die Einbuchtungen konisch, konusstumpfförmig, konusstumpfförmig mit Kugelkuppe, kuppenförmig, pyramidenförmig, pyramidenstumpfförmig, pyramidenstumpfförmig mit Kugelkuppe, torusförmig mit verschiedenem runden oder abgeflachtem Querschnitt sein.

Erfindungsgemäß weisen die Flanschen der verbundenen Profile eine konkave oder konvexe Wölbung oder eine stumpfwinklige V-förmige Biegung in Längsrichtung auf; hier dringen, in zusammengesetzter Position, die Scheitelbereiche der Ausformungen an den äußeren Flanschen in die Vertiefungen der entsprechenden Ausformungen an den Flanschen des, zwischen den äußeren Flanschen, eingesetzten Profils welches dadurch elastisch festgehalten wird.

Vorteilhafterweise sind die Flanschen des zweiten Profils welches zwischen die Flanschen des ersten eingeschoben wird am äüßersten Längsrand leicht in Richtung Profilachse gebogen. Natürlich ist der Klammereffekt zwischen den Profilen auch erreichbar wenn die Einbuchtungen durch Stanzausformungen ersetzt werden das heißt durch Bohrungen mit Ausschmiegung wie zur Aufnahme von Senkköpfen. An den Flanschen des zweiten Profils, welche zwischen den Flanschen des ersten Profils eingeschoben sind, können alle oder ein Teil der Einbuchtungen oder der Stanzausformungen durch Bohrungen ersetzt werden welche einen Durchmesser aufweisen der dem größeren Durchmesser der rückseitigen Ausformungen der Einbuchtungen oder der Stanzausformungen am ersten Profil entspricht. Um die Verbindung zwischen zwei Strukturelementen welche durch Zusammensetzung zweier U-Profile entstanden sind zu erreichen, sieht die Erfindung vor, daß der Längsrand der zwei Flanschen welche zwischen den Flanschen des äußeren Profils eingeführt werden die Form von symmetrischen oder asymmetrischen Wellen oder Zähnen aufweist, wobei der Zahnabstand dem Modul der Einbuchtungen, bzw. der Stanzausformungen oder der entsprechenden Bohrungen, entspricht und wobei die zusammengesetzten U-Profile welche das zweite Strukturelement bilden welches mit dem ersten verbunden werden soll, am Endbereich, in Bezug auf die Flanschen, einen vorstehenden Steg aufweisen oder wobei eine oder beide der entsprechenden Enden der Flanschen so geschnitten und gebogen sind daß sie mit dem Ende des Steges in einer gleichen Ebene liegen. Diese Enden der Stege stehen, gegenüber jenen der Flanschen, um ein- bis zweimal das Maß vor welches ungefähr der Breite der Flanschen entspricht und weisen entlang dem Rand der Stirnseite eine Abkantung nach innen von ca. 90° oder einen Umschlag mit um die Stärke der Flanschen distanzierten Schenkeln, auf. Diese Abbiegung, bzw. dieser Umschlag, welcher eventuell mit einer Schräge ausgeführt wird welche der Schräge der Rücken der Zähne entspricht welche entlang der Längsränder der Flanschen vorgesehen sind, ermöglicht das gegenseitige Einhängen zwischen den zwei U-Profilen welche ein Strukturelement bilden und dem inneren U-Profil des zweiten Strukturelementes welches mit dem ersten Strukturelement auch einen Winkel von 90° bildet. Diese Verbindung im rechten Winkel zwischen zwei Strukturelementen mit quadratischem oder mit rechteckigem Querschnitt welcher durch das Zusammenfügen von jeweils zwei U-Profilen entsteht wird entweder durch das Eindringen der Vorsprünge der rückseitigen Ausformungen der Einbuchtungen in die Einbuchtungen oder in die entsprechenden Bohrungen welche am inneren Profil vorgesehen sind erreicht oder durch die Wirkung der Abkantung oder des Umschlages, welcher an den Enden der Stege der beiden zusammengefügten U-Profile vorgesehen sind, auf die Rücken der Zähne oder Wellen des inneren U-Profils des zweiten Strukturelementes, erreicht.

Erfindungsgemäß ist auch eine kombinierte Wirkung der beiden Verbindungen möglich. Eventuell ist die Verbindungsposition durch ein Eingreifen der rückseitigen Ausformungen der Einbuchtungen in die Bohrungen an den Flanschen des inneren Profils welches das zweite Strukturelement bildet möglich, in diesem Fall weist die Ausformung im unteren Bereich einen Einschnitt auf in welchen die Wandstärke der Flansche eindringt.

Erfindungsgemäß kann jeder Zahnbrust entsprechend und in Fortsetzung dieser ein Einschnitt in den Flansch vorgesehen sein welcher in die selbe Richtung der Zahnbrust verläuft. Wird der Zahn an diesem Einschnitt im Bereich der Zahnbrust soweit in Richtung der Profilachse gebogen daß, in Bezug auf den Bereich des Zahngrundes, seine Zahnbrust ungefähr um die Wandstärke des Flansches versetzt ist, so ist es möglich das Aushängen der Einhängabkantungen zu erreichen indem das entsprechende Strukturelement gegen die Zahnausrichtung (nach oben) gezogen wird, das erneute Einhängen hingegen erfolgt durch Verschieben in die Gegenrichtung (nach unten). Auf diese Weise ist es möglich eine Änderung der Verbindungsposition (nach oben), ohne Abmontage von Teilen, zu erreichen.

Erfindungsgemäß können die Einhängabkantungen am Endbereich eines als Einlauf gebogenen Randes vorgesehen sein um so das Einhängen an den zahnoder wellenförmigen Vorsprüngen zu begünstigen. Weiters schließt die Erfindung nicht aus, daß das eingehängte Strukturelement aus einem U-Profil, oder aus zwei zu einem U-Profil zusammengesetzten L-Profilen, besteht. Durch Vorsehen eines gewissen Spieles zwischen dem Pfosten und der Stirnfläche der obenliegenden Wand des Strukturelementes mit quadratischem oder rechtwinkligem Querschnitt welches am Pfosten eingehängt ist, so daß eine Schwenkung des horizontalen Strukturelementes nach oben um einen Winkel, welcher größer als jener des Zahnrückens oder der Vorsprünge möglich ist, kann das horizontale Strukturelement für ein Verstellen in vertikaler Richtung frei gemacht werden um es in gewünschter höherer oder niedriger Position wieder einzuhängen. Der Abstand zwischen der Stirnfläche der obenliegenden Wand des am Pfosten eingehängten horizontalen Strukturelementes kann auch so groß sein, daß daran weitere Strukturelemente (Längselemente oder Abstandselemente) eingesetzt oder eingehängt werden können.

Die Sägezähne an den Flanschen welche zwischen den Flanschen des äußeren Profils eingefügt sind können auch durch wellenförmige Vorsprünge, andere Zahnformen, Kerben oder Durchbrüche ersetzt werden welche an den Flanschen vorgesehen sind, um 90° oder 180° umgebogen sind und symmetrische Form haben so daß die Verspannung, unter Nutzung der entsprechenden Schrägen, gemäß mehrerer Richtungen möglich ist. Natürlich muß in diesem Fall der abgekantete Rand am Endbereich der Einhängarme welche vom Profilsteg abstehen, der Form und den Abmaßen der Ausnehmungen, Kerben oder Vorsprünge entsprechen um an diesen die Funktion des Einhängens ausüben zu können.

Das erfindungsgemäße Zusammenfügen von U-Profilen ermöglicht weiters das einfache verbinden von Profilen oder von zusammengesetzten Strukturelementen durch Zusammenstecken gemäß der Profillängsachse indem außen ein oder mehrere, mit Einbuchtungen versehene, Profile aufgesteckt werden welche einen geeigneten Querschnitt aufweisen um die Querschnitte der ersten Profile zu umfassen.

Die Erfindung schließt nicht aus, daß die Verbindung zwischen den Profilen welche die horizontalen Strukturelemente bilden, nicht durch Einbuchtungen oder Stanzausformungen welche in die entsprechenden Einformungen, Stanzausformungen oder Bohrungen am zweiten Profil eingreifen hergestellt wird, sondern durch einfaches Einhängen an den vertikalen, erfindungsgemäßen Strukturelementen oder durch das Aufstecken von Profilen oder U-förmigen Profilstücken von oben mit nach unten gerichteten Flanschen.

Gemäß einer Weiterentwicklung der Erfindung besteht die Möglichkeit, durch Einsatz des selben Profiltyps, auch die Verbindung von aneinander anliegenden Profilen und/oder Strukturelementen zu erreichen, wobei auch in diesem Fall ein modulares teleskopisches Verstellen möglich ist. Beide Systeme ermöglichen also eine modulare Längsanpassung des verbundenen Elementes.

Es bietet sich eine weitere Verbindungsart zwischen den Strukturelementen an welche erfindungsgemäß durch Zusammenfügen von Profilen hergestellt sind, indem an einem einzigen U-Profil im Mittelbereich beide Flanschen für eine entsprechende Länge entfernt werden so daß der entstandene freie Steg das erste Strukturelement umfassen kann wobei die rückseitigen Ausformungen der Einbuchtungen des Steges in die entsprechenden Einbuchtungen am Strukturelement eindringen und die beiden, an besagten Mittelbereich anschließenden, Profilabschnitte ineinandergefügt werden.

Insbesondere wegen der Einbuchtungen an den Profilen und an den entsprechenden Strukturelementen, bietet sich das System auch für den Einsatz bekannter Verbindungselemente an um so sämtliche mit dem Zusammenbau auftretenden Probleme lösen zu können.

Das erfindungsgemäße System umfaßt weiters Ablagen oder Paneele welche entlang ihren Rändern an erfindungsgemäßen Profilen befestigt sind oder deren Ränder schachtelartig gebogen sind und mit Einbuchtungen, Stanzausformungen oder Bohrungen versehen sind welche eventuell mit den, durch Zusammenfügen erfindungsgemäßer Profile hergestellten, Strukturelementen zusammenwirken. Zwecks Stabilisierung der Struktur können Platten oder Rahmenelemente vorgesehen werden welche Flanschen aufweisen welche zwischen den Flanschen der, die vertikalen, bzw. die horizontalen, Strukturelemente bildenden Profile eingesetzt werden können.

Die Erfindung wird anschließend anhand einiger, in den beigelegten Zeichnungen schematisch dargestellter vorzuziehender Ausführungsbeispiele von Verbindungssystemen zwischen Profilen zur Herstellung erfindungsgemäßer Strukturen für Lagerregale näher erklärt; dabei erfüllen die Zeichnungen rein erklärenden, nicht beschränkenden Zweck.

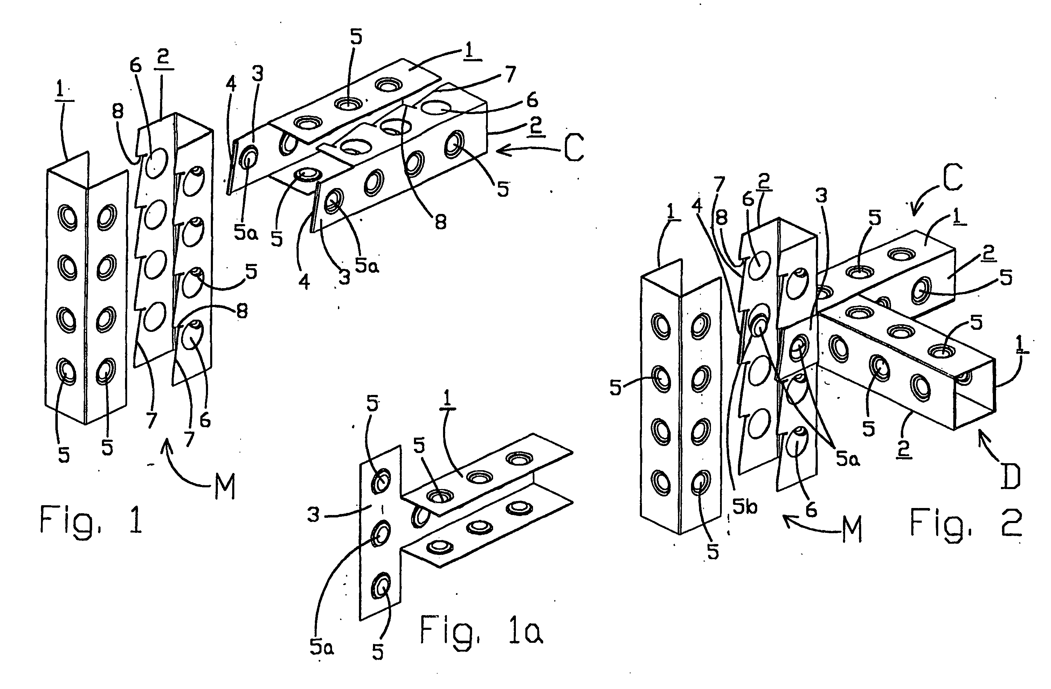

Die Fig. 1 ist eine perspektivische Darstellung von zwei U-Profilen welche zusammenfügbar sind um einen vertikalen Pfosten mit quadratischem Querschnitt zu bilden und von zwei U-Profilen welche zusammenfügbar sind um ein horizontales Abstandsstück zu bilden welches in einem Winkel von 90° mit dem Pfosten, ohne Anbringung von Verbindungselementen, verbunden werden kann.

Die Fig. 1a zeigt in perspektivischer Darstellung den Endbereich eines Profils, wobei der Verbindungsstreifen drei Einbuchtungen aufweist.

Die Fig. 2 ist eine perspektivische Darstellung der erfindungsgemäßen, in Fig. 1 gezeigten, Strukturelemente mit einem Abstandsstück welches an einem Längsstück befestigt ist, welches seinerseits an einem der U-Profile eingehängt ist welches zusammen mit einem zweiten U-Profil, infolge Zusammenfügung, einen Pfosten bilden wird.

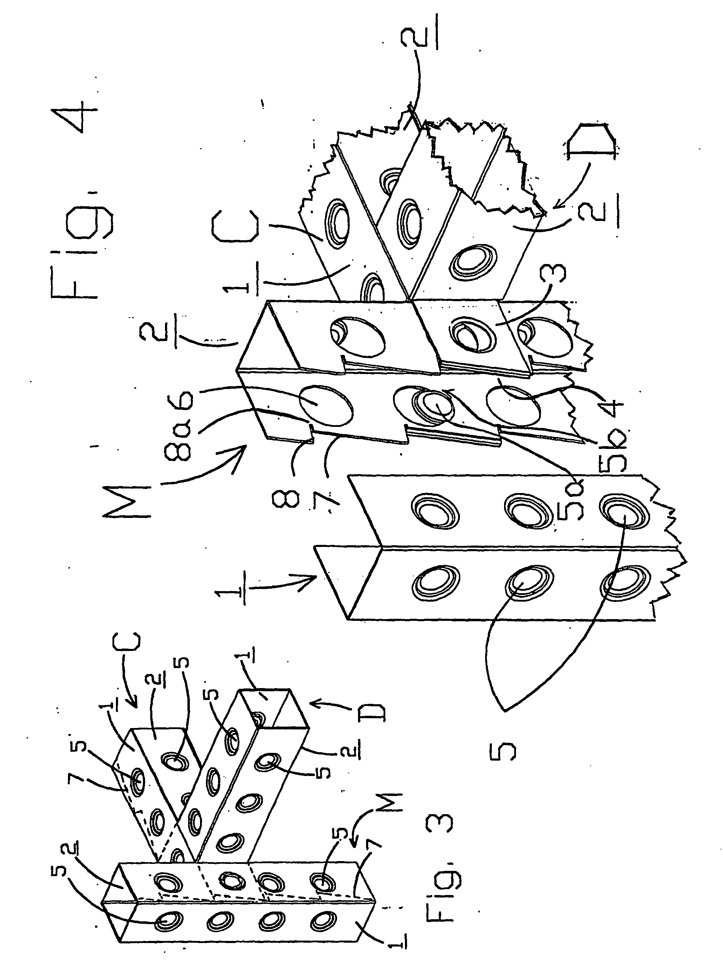

Die Fig. 3 ist eine perspektivische Darstellung der erfindungsgemäßen, in den Fig. 1 und 2 dargestellten Strukturelemente nach erfolgter Zusammenfügung der Profile.

Die Fig. 4 zeigt in vergrößertem Maßstab das Detail der Verbindung zwischen den erfindungsgemäßen, in Fig. 2 dargestellten Verbindungsteilen.

Die Fig. 5 zeigt in perspektivischer Darstellung den Verbindungsbereich von Strukturelementen welche gemäß der Längsachse, verbunden sind.

Die Fig. 6 zeigt in perspektivischer Darstellung die Verbindung von zwei erfindungsgemäßen Strukturelementen welche einen Winkel von 90° bilden wobei eines der Strukturelemente erfindungsgemäß zusammengesetzt ist und ein U-Profil welches einen Bereich des Steges ohne Flanschen aufweist und die zwei zu einem Strukturelement zusammensetzbaren Teile dieses U-Profils verbindet; die Flanschen sind an einer Seite so geschnitten, daß das Einhängen oder Einsetzen eines weiteren Strukturelementes ermöglicht wird.

Die Fig. 7 ist die perspektivische Darstellung eines Teiles eines erfindungsgemäß zusammengesetzten Lageregals mit einer vollständig dargestellten Ablage, mit einer teilweise dargestellten Ablage, mit unterschiedlich eingehängten oder eingesetzten Strukturelementen und mit einem Stabilisierungselement welches an zwei Pfosten befestigt ist.

Der erfindungsgemäße Zusammenbau gründet auf dem Einsatz von U-Profilen 1, 2 welche, zum Beispiel durch Kaltverformung, aus rostfreiem Stahl hergestellt sind und einen Steg mit, entlang seiner Längsachse, zueinander gleich beabstandeten Einbuchtungen 5 aufweist von welchen zwei symmetrische Flanschen abstehen welche ebenfalls entlang ihrer Längsachse Einbuchtungen 5 und/oder Bohrungen 6 aufweisen welche den Einbuchtungen am Steg entsprechen. Die Maße des Steges und der Flanschen der Profile 1 und 2 sind so gewählt, daß das Zusammensetzen durch das Einschieben der Flanschen des Profils 2 zwischen jenen des Profils 1 erfolgt wodurch ein Strukturelement mit quadratischem oder rechteckigem Querschnitt gebildet wird welches entweder durch die elastische Wirkung zwischen den inneren und den äußeren Flanschen oder durch das Eindringen der rückseitigen Ausformungen der Einbuchtungen 5 des Profils 1 in die Ausnehmungen der Einbuchtungen 5 oder in die Bohrungen 6 des Profils 2, zusammenhält. Insbesondere als Längselemente C und als Abstandselemente D können einfache U-Profile oder zwei, zu einem U-Profil zusammengesetzte, L-Profile eingesetzt werden. Erfindungsgemäß können die Einbuchtungen 5 verschiedene Formen aufweisen zum Beispiel die Form einer Kugelkuppe, eines Konus, einer Pyramide, eine zusammengesetzte Form oder jene eines Torus; die Einbuchtungen können auch von Stanzausformungen ersetzt werden welche eine Ausschmiegung mit zentraler durchgehender Bohrung aufweisen. Insbesondere das Profil 2 welches mit seinen Flanschen zwischen den Flanschen des Profils 1 eingeschoben werden kann um so als Strukturelement stirnseitig mit anderen aus ineinandergeschobenen Profilen 1 und 2 bestehenden Strukturelementen verbunden zu werden, weist vorteilhafterweise an seinen Längsrändern Sägezähne mit schrägem Zahnrücken 7 und mit Zahnbrust 8 auf welche so ausgerichtet sind, daß an den Zahnrücken Druckbelastungen aufgenommen werden können, zum Beispiel an den Pfosten sind die Zähne nach unten gerichtet. Die Sägezähne entsprechen in Ihrer Anordnung jener der Einbuchtungen 5, bzw. der Bohrungen 6; sie können auch durch Zähne mit Anordnung im Teilmodul der Anordnung der Einbuchtungen 5 oder der Bohrungen 6, oder durch Kerben, Vorsprünge und/oder durch Durchbrüche verschiedener Form, ersetzt werden welche eventuell auch zueinander gerichtet in eine Ebene gebogen sind welche zu jener des Profilsteges parallel ist. Das Strukturelement, zum Beispiel ein Längselement C, welches stirnseitig mit einem Pfosten M verbindbar ist, wird durch Zusammenstecken der Profile 1 und 2 durch Einschieben der Flanschen des Profils 2 zwischen die Flanschen des Profils 1 gebildet und weist an beiden Endbereichen zwei vorstehende parallele Arme 3 auf welche vom Steg ohne Flanschen der Profile 1 und 2 gebildet werden. Die Arme 3 weisen am freien Ende eine Abkantung von 90° oder einen Umschlag von 180° auf welche eventuell der Neigung der Zahnrücken 7 am Profil 2 entspricht, an welchen sie eingehängt sind und wirken. Diese Biegungen können mit einem Rand versehen sein welcher so geformt ist, daß das Einhängen am Rücken der Vorsprünge 7 erleichtert wird.

Eine zusätzliche Zusammenwirkung kann zwischen der rückseitigen Ausformung der Einbuchtungen 5a welche an besagten Armen 3 vorgesehen sind und den Einbuchtungen 5 oder den Bohrungen 6 an den Flanschen des Profils 2 erreicht werden. Die Verbindungsarme 3 können mit einer oder mehreren Stegteilen versehen sein welche zum Beispiel durch Stanzen und Ausbiegen aus den Stegen der Profile geformt werden können um so eine Verbindung zu erreichen bei welchen mehrere rückseitige Ausformungen der Einbuchtungen 5 als Steckverbindung wirken. Insbesondere im Fall daß die rückseitigen Ausformungen der Einbuchtungen 5a an den Bohrungen wirken, können diese Ausformungen an der unteren Seite einen Einschnitt oder einen Sitz 5b aufweisen in welchen, in Einhängstellung, die Wandstärke des Flansches des Profils 2 dringt.

Der Einhängevorgang zwischen zwei Strukturelementen, zum Beispiel zwischen einem Pfosten M und einem Längselement C erfolgt gemäß folgendem Ablauf:
1. Zusammenfügen der U-Profile 1 und 2 zu einem Längselement C wobei beide Profile mindest am Endbereich welcher verbunden werden soll mit einem abstehenden Arm 3 versehen sind.
2. Einsetzen des U-Profils 2 des Pfostens M zwischen die Arme 3 welche am Ende des Längselementes C abstehen und eventuell am Rand schräg verbogen sind, bis die Abkantungen 4 an den Zahnrücken 7 aufliegen oder einhängen und die Ausformungen 5a in die Bohrungen 6 an den Flanschen des Profils 2 des Pfostens eindringen.
3. Verschieben des Längselementes C nach unten bis die Wandstärke des Profils 2 in den Einschnitt 5b an der Ausformung 5a eindringt und das Gleiten der Abkantung 4 am Zahnrücken 7 das Annähern der Stirnflächen der Flanschen der Profile 1 und 2 welche das Längselement bilden an die Außenfläche des Steges des Profiles 2 welches den Pfosten M bildet, erfolgt.
4. Einsetzen des Profils 1 in das Profil 2 um den Pfosten M zu bilden.

Durch diesen letzten Arbeitsgang wird auch die Versperrung des gesamten Verbindungssystems durch Eindringen der rückseitigen Ausformungen der Einbuchtungen 5 in die Einbuchtungen 5a und durch das elastische Zusammenhalten der vorstehenden Arme 3 mit den Ausformungen 5a in Einraststellung innerhalb der Bohrungen 6 und mit den Abkantungen 4 in Einhängestellung an den Zahnrücken 7, erreicht.

Nachdem die beiden Arme 3 des Längselementes C zwischen den Flanschen der beiden U-Profile 1 und 2 welche den Pfosten M bilden eingesetzt sind, liegen diese Flanschen im entsprechenden und anliegenden Bereich nicht aneinander an, um diesen Spalt abzudecken kann der Längsrand der Flanschen des Profils 2 um 90° oder 180° nach innen gebogen sein so daß eine Abkantung entsteht welche in ihrem Ausmaß der Flanschenwandstärke entspricht und welche im Bereich der Arme 3 (zum Beispiel durch Abfeilen) entfernt wird. Erfindungsgemäß kann die Verbindung zwischen dem Pfosten M und dem Längsteil C oder dem Abstandsteil D auch mittels Arme 3 ohne Abkantung 4 und somit auch mit Profilen 2 ohne Sägezähnen 7, Kerben und/oder Vorsprünge entlang dem Flanschenrand erfolgen; in diesem Fall erfolgt die Verbindung der vorstehenden Arme 3 am Profil 2 über die Ausformungen 5a mit oder ohne Einschnitt 5b.

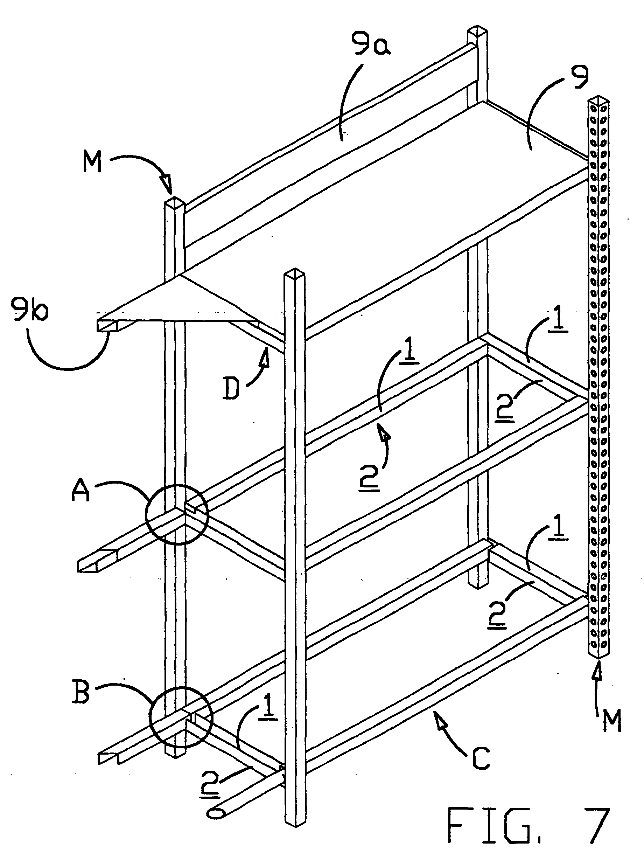

Durch Vorsehen eines Spieles zwischen der Außenfläche des Steges des Profils 2 der Pfosten M und der Stirnfläche der oberen Flanschen der Profile 1, 2 welche den Längsteil C bilden so daß in, am Pfosten M, eingehängter Position eine Schwenkung des Längsteiles C nach oben um einen leicht größeren Winkel als jener des Zahnrückens 7 möglich ist, kann eine vertikale Verstellung der Einhängeposition, ohne Demontage des Profils 1 vom Pfosten M, erreicht werden. Durch Vergrößern dieses Abstandes zwischen den besagten Stirnflächen der oberen Flanschen der Längsteile C und der entsprechenden Außenfläche des Pfostens M, wird ein Einhängen A oder Einsetzen B der Abstandselemente D an den vertikalen Wänden der Profile 1, 2 welche das Längselement C bilden ermöglicht (Fig. 7).

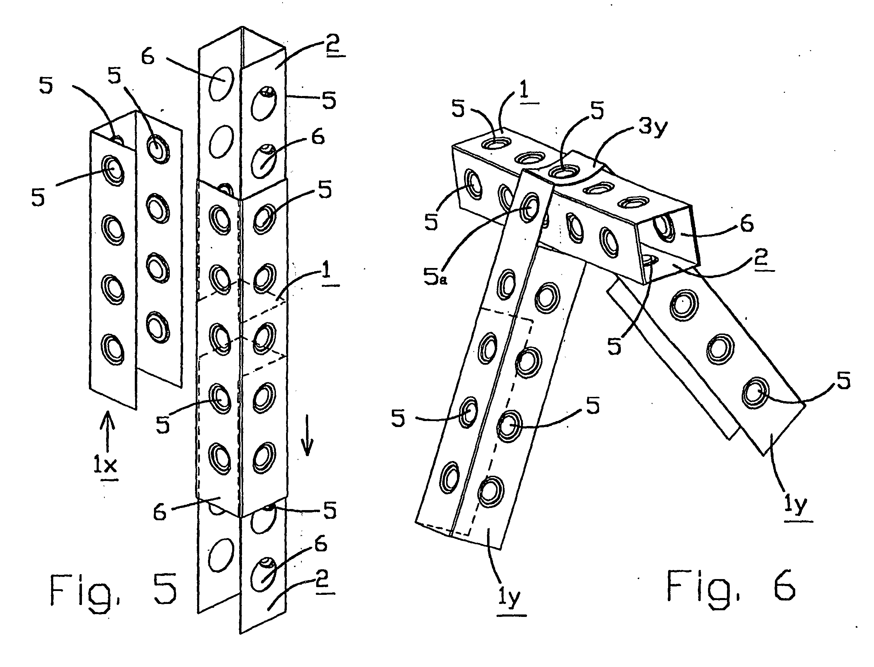

Erfindungsgemäß können die Profile auch dadurch verbunden werden, daß an einem Profil 1y, welches gegebenenfalls dem Profil 1 identisch ist, über eine Länge welche der Summe von mindestens drei Seitenlängen des Querschnittes des Strukturelementes mit welchem dieses Profil zu verbinden ist entspricht, ohne Flanschen ist und indem der Steg auch gemäß verschiedener Winkel so gebogen ist, daß er das aus den Profilen 1 und 2 zusammengesetzte Strukturelement umfaßt, wobei die rückseitigen Ausformungen der Einbuchtungen 5 des Steges in die entsprechenden Einbuchtungen der zusammengefügten Profile 1 und 2 (Fig. 6) eindringen.

Um Profile 1 oder 2 oder Strukturelemente welche durch Zusammenfügen von Profilen 1 und 2 entstehen gemäß ihrer Längsachse zu verbinden ist das Aufsteccken von Stücken der Profile 1 und/oder 2 mit entsprechendem Querschnitt möglich wobei diese die entsprechenden Endbereiche beider zu verbindenden Profile abdecken. Weiters ist auch die Möglichkeit gegeben eine Verbindung zwischen den Profilen 1, 2 und/oder den aneinander seitlich anliegenden Strukturelementen zu schaffen. Dieses Verbindungssystem zwischen Elementen welche gemäß ihrer Längsachse oder aneinander anliegend verbunden werden ermöglicht auch eine Verbindung wobei die Länge der Strukturelemente teleskopartig verändert werden kann.

Die Erfindung schließt nicht die Verbindung verschiedener Art auf bekannte Weise unter Einsatz bekannter Verbindungs- und Befestigungselemente aus; insbesondere ist das hier beschriebene System mit dem modularen Verbindungssystem welches Gegenstand des IT-Ansuchens Nr.: BZ2000A000015 ist, kompatibel.

Erfindungsgemäß können bei Erstellung der Lageregale mittels der oben beschriebenen Strukturelemente, die Ablagen 9 an einem oder mehreren Rändern die selben Eigenschaften der Profile 1 oder 2 aufweisen oder an diesen, bzw. an Strukurelementen welche aus diesen zusammengefügt sind, angebracht sein. Vorteilhafterweise können die Ablagen 9 an einem oder an mehreren Rändern schachtelförmig 9b ausgeformt sein und im Bereich der Pfosten ausgeschnitten sein um so am Pfosten anzuliegen oder einzugreifen und die darunterliegende tragende Struktur C, D vollständig abzudecken.

Um die Struktur zu stabilisieren können an den Pfosten M Stabilisierungselemente 9a oder Rahmenelemente angebracht werden welche di selben Verbindungssysteme aufweisen wie sie für die Strukturelemente 9, C, D beschrieben worden sind.

Die Erfindung schließt nicht aus, auch an den Rändern der Flanschen des Profils 1 zusätzlich, Zähne, Vorsprünge oder Kerben, bzw. an den selben Flanschen auch zusätzlich Ausnehmungen gleicher Form oder anderer Form als jene welche am Profil 2 vorgesehen sind, vorzusehen.

Um die Strukturelemente M, D, C zu verstärken können Profile eingeschoben werden welche einen derartigen Querschnitt haben, daß sie eine Auflage für die nach innen vorstehenden Ausformungen der Ausbuchtungen 5 und/oder für die Innenflächen der Wände und/oder für die Eckbereiche der Strukturelemente bieten. Diese Verstärkungsprofile können in Längsrichtung in Strukturelemente eingeschoben werden oder seitlich, vor dem Zusammenfügen der Profile 1, 2, eingesetzt werden. In diesem letzten Fall ist es möglich die Verstärkung auf einen begrenzten Bereich, zum Beispiel auf den Verbindungsbereich zu begrenzen indem das Verstärkungsprofil eine entsprechende Länge hat und vorteilhafterweise weniger tiefe Einbuchtungen aufweist um so in der vorbestimmten Position festgehalten zu werden.

Erfindungsgemäß wird die Verbindung zwischen den Profilen 1, 2 welche die vertikalen Strukturelemente M oder die horizontalen Strukturelemente C, D bilden durch Vorsehen einer Wölbung oder einer V-förmigen stumpfwinkligen Biegung in Längsrichtung an den Flanschen erreicht, wobei sich die Scheitellinie dieser Ausformungen der zwei äußeren Flanschen in die entsprechenden Rillen an den zwei inneren Flanschen elastisch festklammern.

Besagte Stege können mit einem Gewindeloch für verstellbare Füßchen versehen sein.

## Patentansprüche

1. Profile (1, 2) mit U-förmigem Querschnitt für das Zusammensetzen von tragenden Strukturen wobei diese Profile einen Steg aufweisen von welchem unter sich parallele Flanschen abstehen und der Steg, sowie die Flanschen, entang ihrer Längsachse, mit Einbuchtungen (5), Bohrungen (6) und/oder Stanzausformungen welche aus einer Bohrung im Zentrum einer Ausschmiegung bestehen, aufweisen, **dadurch gekennzeichnet, daß** der Querschnitt des U-förmigen Profils (1) welches, nach innen vohrstehende Einbuchtungen (5) und/oder Stanzausformungen und/oder Torus-förmige Ausformungen aufweist, derartige Form und Abmaße hat, daß es zwischen seinen Flanschen ein U-Profil (2) aufnehmen kann welches ebenfalls Einbuchtungen (5) und/oder Stanzausformungen und/oder Torus-förmige Ausformungen an seinem Steg und an den Flanschen aufweist oder an letzteren durchgehende Bohrungen aufweist, wobei die rückseitigen Ausformungen der Einbuchtungen (5) oder Stanzausformungen an den Flanschen des äußeren Profils (1) in die Einbuchtungen (5) oder Stanzausformungen, bzw. in die Bohrungen (6) an den Flanschen des inneren Profils (2) welche eventuell so gebogen sind, daß ein Zusammenfügen erleichtert wird, einrasten und daß die elastische Klammerwirkung zwischen den U-Profilen (1, 2) zwecks Bildung eines Profils oder Strukturelementes (C, D, M ) mit quadratischem oder rechteckigen Querschnitt dadurch erreicht wird, daß an jedem der Flanschen der U-Profile eine konkave oder konvexe Wölbung oder stumpfwinklige V-förmige Biegung vorgesehen ist.

2. Profile gemäß Anspruch 1, **dadurch gekennzeichnet, daß** im Falle von Bohrungen (6) in welche die rückseitigen Ausformungen der Einbuchtungen (5) oder der Stanzausformungen eindringen, diese einen, dem größeren Außendurchmesser dieser Ausformungen entsprechenden oder leicht größeren oder der größeren Diagonale der rückseitigen Ausformung der Einbuchtungen (5) oder der Stanzausformungen entsprechenden, Durchmesser aufweisen.

3. Profile gemäß Anspruch 1, **dadurch gekennzeichnet, daß** das innere U-Profil (2) entlang beider Ränder der Flanschen welche zwischen die Flanschen des äußeren Profils (1) einsetzbar sind, Sägezähne mit zur Längsachse geneigten Rücken (7) aufweist an welchen sich die abgekanteten oder gefalteten Ränder (4), welche eventuell einen um 90° oder 180° verbogenen einleitenden Randbereich aufweisen, der Einhängarme (3) anlegen, welche am Endbereich der Strukturelemente (C, D) welche unter sich oder mit anderen Strukturelementen (M) in einem Winkel von 90° verbindbar sind, abstehen.

4. Profil gemäß Anspruch 3, **dadurch gekennzeichnet, daß** entsprechend dem Bereich der Zahnbrust (8), mit deren Verlauf ausgerichtet, ein Einschnitt (8a) vorgesehen ist und daß im Bereich dieses Einschnittes die Zahnbrust (8), in Bezug auf den Einschnittgrund, um das Maß der Wandstärke oder etwas mehr versetzt ist.

5. Profil gemäß Anspruch 1, **dadurch gekennzeichnet, daß** das innere U-Profil (2), längs dem Rand beider Flanschen welche zwischen die Flanschen des äußeren U-Profils (2) einsetzbar sind, Kerben und/oder wellen- oder zahnförmige, symmetrische oder asymmetrische Vorsprünge aufweisen welche in ihrer Anordnung dem Modul der Einbuchtungen (5), bzw. der Bohrungen (6), oder der Stanzausformungen entsprechen oder einem Vielfachen oder Bruchteiles dieses Moduls entsprechen.

6. Profil gemäß Anspruch 1, **dadurch gekennzeichnet daß** die einsetzbaren Flanschen des inneren Profils (2) Durchbrüche mit, zur Längsachse der Flanschen nur in eine Richtung oder symmetrisch in beide Richtungen geneigten Rändern aufweisen um eine Verspannung in eine oder in beide Richtungen an den mit Abkantung (4), Zahn oder Vorsprung versehenen, Einhängarmen (3) zu erzielen.

7. Verbindungssystem zwischen äußeren U-Profilen (1) und inneren U-Profilen gemäß den Ansprüchen von 1 bis 4, **dadurch gekennzeichnet, daß** die Klammerwirkung zwischen den zusammengefügten Profilen durch elastische Verformung der Flanschen beider Profile (1, 1 x, 1y, 2), unter Eindringen der rückwärtigen Ausformungen der Einbuchtungen (5) oder Stanzausformungen welche an den Flanschen des äußeren Profils (1, 1x) vorgesehen sind, in die Einbuchtungen (5), Stanzausformungen, oder Bohrungen welche an den Flanschen des inneren Profils vorgesehen sind, entsteht.

8. Verbindungssystem zwischen Strukturelementen (M, C, D) welche durch Zusammenfügen von U-Profilen (1, 2; 1x; 1y) gemäß Anspruch 7 geschaffen werden, **dadurch gekennzeichnet, daß** der Endbereich eines Strukturelementes (C) abstehende Arme (3) aufweist welche mit einer oder mit mehreren Einbuchtungen (5, 5a) versehen sind welche mit ihrer rückseitigen Ausformung in die Einbuchtungen (5), in die Stanzausformungen oder in die Bohrungen (6) eingreifen welche an den Flanschen des inneren U-Profils (2) vorgesehen sind und daß die entsprechenden rückseitigen Ausformungen der Einbuchtungen (5) oder Stanzausformungen welche an den Flanschen des U-Profils (1) welches anschließend außen auf das innere Profil (2) aufgesteckt wird , in die an den Armen (3) vorgesehenen Einbuchtungen (5, 5a) oder Stanzausformungen eingreifen.

9. Verbindungssystem gemäß Anspruch 8, **dadurch gekennzeichnet, daß** der äußerste Rand (4) der Arme (3) um 90° abgekantet ist oder um 180° so gefaltet ist daß zwischen den Schenkeln ein mindestens der Wandstärke der Profile (1, 2) entsprechender Spalt frei bleibt, um am Rücken (7) der Zähne, der Wellen, an den Vorsprüngen oder in den Kerben, bzw. in Durchbrüchen, welche längs dem Flanschenrand des inneren Profils (2) oder gegebenenfalls des äußeren Profils (1) vorgesehen sind, eingehängt werden zu können, bzw. anzuliegen.

10. Verbindungssystem gemäß Anspruch 8, **dadurch gekennzeichnet, daß** die Ausformung (5a) an den abstehenden Armen (3) an einer Seite oder beidseitig einen Einschnitt oder Sitz (5b) aufweist welcher parallel oder gegenüber der Längsachse des Profils (2) leicht geneigt ist um so, in die Bohrung (6) einragend, an der Flanschenwand einrasten zu können.

11. Verbindungssystem gemäß Anspruch 8, **dadurch gekennzeichnet, daß** die Verbindung eines Profils (1y) an einem Strukturelement welches durch Zusammenfügen zweier Profile (1, 2) gebildet ist, durch den Steg des Profils (1y) erfolgt der am Bereich welcher das Strukturelement umfaßt keine Flanschen aufweist und dessen Flanschen an einem Profilabschnitt zwischen die Flanschen am zweiten Profilabschnitt (1y) eingesetzt wird, wobei die rückwärtigen Ausformungen der Einbuchtungen (5) der äußeren Flanschen in die Einbuchtungen der inneren Flanschen eingreifen um die beiden Profilabschnitte (1y) zusammenzuhalten und wobei die rückseitigen Ausformungen der Einbuchtungen (5) am flanschfreien Abschnitt in die entsprechenden Einbuchtungen (5) am Strukturelement eindringen.

12. Verbindungssystem gemäß Anspruchs 8, **dadurch gekennzeichnet, daß** die Verbindung zwischen gleichen oder unterschiedlichen Profilen (1, 2) oder zwischen Strukturelementen (M, C, D) welche gemäß ihrer Längsachse ausgerichtet sind oder parallel aneinander anliegen durch Aufstecken eines U-Profils (1, bzw. 1x) erfolgt welches Klammerelemente (5) aufweist.

13. Verbindungssystem gemäß Anspruch 7 und Verbindung gemäß Anspruch 8, **dadurch gekennzeichnet, daß** innen zwischen die Profile (1, 2; 1y) und/oder an den Verbindungsbereichen achsial, oder vor dem Zusammenfügen, seitlich Rohrprofile oder Profile mit offenem Querschnitt eingeschoben werden welche eine Verstärkung der Strukturelemente und/oder eine Auflage für die Klammerelemente (5) bilden.

14. Verbindungssystem gemäß den vorhergehenden Ansprüchen 7-13, **dadurch gekennzeichnet, daß** zwischen der Außenfläche des Steges des inneren, mit Zähnen versehenen, U-förmigen Profils (2) welches Teil des vertikalen Strukturelementes (M) ist und der Stirnfläche der Flanschen welche die obere Wand des horizontalen, am vertikalen Strukturelement (M) einhängbaren, Strukturelementes (C) bilden, ein Spiel vorgesehen ist welches ein Schwenken des horizontalen Strukturelementes (C) nach oben um einen Winkel welcher leicht größer als jener des Rückens der Zähne (7) ist ermöglicht und daß bei Vorsehen eines entsprechenden Abstandes zwischen besagter Außenfläche am vertikalen Strukturelement (M) und den besagten Stirnflächen, horizontale Strukturelemente (D) an den vertikalen Wänden der Profile (1, 2) welche das erste horizontale Strukturelement (C) bilden eingehängt (A) oder eingesetzt (B) werden können.

## Claims

1. Profiles (1, 2) with a U-shaped cross section for putting together load-bearing structures, these profiles having a web, from which parallel flanges project, and the web and the flanges having, along their longitudinal axis, recesses (5), bores (6) and/or punched formations comprising a bore in the centre of a chamfer, **characterized in that** the cross section of the U-shaped profile (1), which has inwardly projecting recesses (5) and/or punched formations and/or toroidal formations, is shaped and dimensioned such that it can accommodate, between its flanges, a U-profile (2), which likewise has recesses (5) and/or punched formations and/or toroidal formations on its web and on the flanges or has bores passing through the latter, the rear-side formations of the recesses (5) or punched formations on the flanges of the outer profile (1) latching into the recesses (5) or punched formations or into the bores (6) on the flanges of the inner profile (2), which are possibly bent so as to facilitate a joining-together operation, and **in that** the elastic clamp action between the U-profiles (1, 2), for the purpose of forming a profile or structural element (C, D, M) with a square or rectangular cross section, is achieved by a concave or convex curvature or obtuse-angled V-shaped bent portion being provided on each of the flanges of the U-profiles.

2. Profiles according to Claim 1, **characterized in that**, in the case of bores (6) into which the rear-side formations of the recesses (5) or of the punched formations penetrate, these bores have a diameter which corresponds to the larger external diameter of these formations or has a slightly larger diameter or one which corresponds to the larger diagonal of the rear-side formation of the recesses (5) or of the punched formations.

3. Profiles according to Claim 1, **characterized in that** the inner U-profile (2), along the two borders of the flanges, which can be inserted between the flanges of the outer profile (1), has sawteeth with a back (7) which is inclined in relation to the longitudinal axis and against which are positioned the angled or folded borders (4) which may have an introductory border region bent through 90° or 180° and which belong to suspension arms (3), which project at the end region of the structural elements (C, D), which can be connected to one another, or to other structural elements (M), at an angle of 90°.

4. Profile according to Claim 3, **characterized in that** an incision (8a) is provided to correspond to the region of the face (8) of the tooth, in alignment with the course taken by the same, and **in that**, in the region of this incision, the face (8) of the tooth is offset, in relation to the base of the incision, by the extent of the wall thickness or somewhat more.

5. Profile according to Claim 1, **characterized in that** the inner U-profile (2), along the border of the two flanges, which can be inserted between the flanges of the outer U-profile (1), has notches and/or undulating or tooth-like, symmetrical or asymmetrical protrusions which correspond, in terms of arrangement, to the module of the recesses (5) or the bores (6) or the punched formations, or to a multiple or fraction of this module.

6. Profile according to Claim 1, **characterized in that** the insertable flanges of the inner profile (2) have through-passages with borders which are inclined just in one direction, or symmetrically in both directions, in relation to the longitudinal axis of the flanges, in order to achieve bracing, in one or both directions, on the suspension arms (3) provided with an angled portion (4), tooth or protrusion.

7. Connecting system between outer U-profiles (1) and inner U-profiles according to Claims 1 to 4, **characterized in that** the clamp action between the joined-together profiles is brought about by elastic deformation of the flanges of the two profiles (1, 1x, 1y, 2), with the rear formations of the recesses (5) or punched formations provided on the flanges of the outer profile (1, 1x) penetrating into the recesses (5), punched formations or bores which are provided on the flanges of the inner profile.

8. Connecting system between structural elements (M, C, D) which are produced by joining together U-profiles (1, 2; 1x; 1y) according to Claim 7, **characterized in that** the end region of a structural element (C) has projecting arms (3) which are provided with one or more recesses (5, 5a) which engage, by way of their rear-side formation, in the recesses (5), in the punched formations or in the bores (6) which are provided on the flanges of the inner U-profile (2), and **in that** the corresponding rear-side formations of the recesses (5) or punched formations which are provided on the flanges of the U-profile (1), which is then plugged onto the outside of the inner profile (2), engage in the recesses (5, 5a) or punched formations provided on the arms (3).

9. Connecting system according to Claim 8, **characterized in that** the outermost border (4) of the arms (3) is angled through 90°, or folded through 180°, such that a gap corresponding at least to the wall thickness of the profiles (1, 2) remains free between the legs, in order to be able to be suspended on, or in order to butt against, the back (7) of the teeth, the undulations, the protrusions or the notches or through-passages which are provided along the flange border of the inner profile (2) or, if appropriate, of the outer profile (1).

10. Connecting system according to Claim 8, **characterized in that** the formation (5a) on the projecting arms (3) has an incision or seat (5b) on one or both sides, this incision or seat being parallel to, or inclined slightly in relation to, the longitudinal axis of the profile (2) in order thus to be capable of being latched in on the flange wall such that it projects into the bore (6).

11. Connecting system according to Claim 8, **characterized in that** the operation of connecting a profile (1y) to a structural element formed by joining together two profiles (1, 2) takes place by way of the web of the profile (1y), which does not have any flanges in the region which encloses the structural element, and of which the flanges on one profile section are inserted between flanges on the second profile section (1y), the rear formations of the recesses (5) of the outer flanges engaging in the recesses of the inner flanges, in order to hold the two profile sections (1y) together, and the rear-side formations of the recesses (5) on the flange-free section penetrating into the corresponding recesses (5) on the structural element.

12. Connecting system according to Claim 8, **characterized in that** the connection between the same or different profiles (1, 2) or between structural elements (M, C, D) which are aligned along their longitudinal axis or butt against one another in parallel take place by virtue of a U-shaped profile (1 or 1x) with clamp elements (5) being plugged on.

13. Connecting system according to Claim 7 and connection according to Claim 8, **characterized in that** tube profiles or profiles with an open cross section, which form a reinforcement of the structural elements and/or a rest for the clamp elements (5), are pushed in internally between the profiles (1, 2; 1y) and/or axially at the connecting regions or laterally prior to the joining-together operation.

14. Connecting system according to the preceding Claims 7-13, **characterized in that** play is provided between the outer surface of the web of the inner, toothed U-shaped profile (2), which is part of the vertical structural element (M), and the end surface of the flanges forming the top wall of the horizontal structural element (C), which can be suspended on the vertical structural element (M), this play allowing the horizontal structural element (C) to be pivoted upwards by an angle which is slightly larger than that of the back of the teeth (7), and **in that**, with the provision of a corresponding spacing between said outer surface on the vertical structural element (M) and the said end surfaces, it is possible to install (A) or insert (B) horizontal structural elements (D) on the vertical walls of the profiles (1, 2) which form the first horizontal structural element (C).

## Revendications

1. Profilés (1, 2) à section transversale en forme de U pour l'assemblage de structures porteuses, ces profilés présentant une âme, d'où font saillie des ailes parallèles entre elles, et l'âme, ainsi que les ailes présentant, le long de leur axe longitudinal, des bosses rentrantes (5), des perçages (6) et/ou des développements d'estampage formées d'un perçage pratiqué au centre d'un relief d'emboutissage, **caractérisés en ce que** la section transversale du profilé (1) en forme de U, qui présente des bosses rentrantes (5) en saillie vers l'intérieur et/ou des découpages d'estampage et/ou des développements à forme torique, a une forme et des dimensions faisant qu'il peut recevoir entre ses ailes un profilé en U (2), qui présente également des bosses rentrantes (5) et/ou des développements d'estampage et/ou des développements à forme torique sur son âme et sur les ailes, ou des perçages traversants sur ces dernières, où les développements, situés en face arrière, des bosses rentrantes (5), ou des développements par estampage réalisés sur les ailes du profilé extérieur (1), s'encliquètent dans les bosses rentrantes (5), ou les développements d'estampage, respectivement dans les perçages (6) réalisés sur les ailes du profilé intérieur (2), qui, éventuellement, sont cintrées de manière à faciliter un assemblage, et **en ce que** l'effet de pince élastique se produisant entre les profilés en U (1, 2) est obtenu pour former un profilé ou un élément structurel (C, D, M) à section transversale carrée ou rectangulaire, par le fait que, sur chacune des ailes des profilés en U, est prévu un bombement concave ou convexe, ou bien un pliage en forme de V à angle obtus.

2. Profilés selon la revendication 1, **caractérisés en ce que**, dans le cas de perçages (6), dans lesquels pénètrent les développements arrière des bosses rentrantes (5) ou des développements d'estampage, ceux-ci présentent un diamètre correspondant au plus grand diamètre extérieur de ces développements ou légèrement plus grand que lui, ou correspondant à la grande diagonale du développement arrière des bosses rentrantes (5) ou correspondant aux développements d'estampage.

3. Profilés selon la revendication 1, **caractérisés en ce que** le profilé en U intérieur (2) présente, le long de ses deux bords, des ailes qui peuvent être insérées entre les ailes du profilé extérieur (1), des dents de scie avec des dos (7) inclinés par rapport à l'axe longitudinal, dos sur lesquels appuient les bords (4) coudés ou pliés, qui présentent éventuellement une zone de bordure introductrice, coudée à 90° ou à 180°, des bras d'accrochage (3), qui sont en saillie sur la zone d'extrémité des éléments structurels (C, D), qui sont susceptibles d'être reliés, entre eux ou à d'autres éléments structurels (M), sous un angle de 90°.

4. Profilé selon la revendication 3, **caractérisé en ce que**, de manière correspondant à la zone du flanc de dent (8), dans l'orientation de son allure, est prévue une entaille (8a), et **en ce que**, dans la zone de cette entaille, le flanc de dent (8) est décalé par rapport au fond d'entaille, le décalage étant de la valeur de l'épaisseur de paroi, ou un peu plus.

5. Profilé selon la revendication 1, **caractérisé en ce que** le profilé en U intérieur (2), le long du bord des deux ailes qui sont susceptibles d'être insérées entre les ailes du profilé en U extérieur (2), présente des entailles et/ou des saillies, ondulées ou en forme de dent, symétriques ou asymétriques, qui, quant à leur agencement, correspondent au module des bosses rentrantes (5), respectivement des perçages (6), ou des développements d'estampage, ou correspondent à un multiple ou à une fraction de ce module.

6. Profilé selon la revendication 1, **caractérisé en ce que** les ailes, pouvant être insérées, du profilé intérieur (2), présentent des passages avec des bords inclinés par rapport à l'axe longitudinal des ailes, uniquement dans une direction ou bien symétriquement dans les deux directions, pour obtenir un serrage de bridage dans l'une ou les deux directions, sur les bras d'accrochage (3) munis de pliage (4), de dent ou de saillie.

7. Système de liaison entre des profilés en U extérieurs (1) et des profilés en U intérieurs selon les revendications 1 à 4, **caractérisé en ce que** l'effet de pince entre les profilés assemblés est produit par une déformation élastique des ailes des deux profilés (1, 1x, ly, 2), accompagnée de pénétration des développements arrière des bosses rentrantes (5) ou des développements d'estampage prévus sur les ailes du profilé extérieur (1, 1x), dans les bosses rentrantes (5), lés développements d'estampage ou les perçages, prévus sur les ailes du profilé intérieur.

8. Système de liaison entre des éléments structurels (M, C, D), créés par assemblage de profilés en U (1, 2; 1x; 1y) selon la revendication 7, **caractérisé en ce que** la zone d'extrémité d'un élément structurel (C) présente des bras (3) en saillie, munis d'une ou plusieurs bosses rentrantes (5, 5a), qui, par leur développement arrière dans les bosses rentrantes (5), s'engagent dans les développements d'estampage ou dans les perçages (6), prévus sur les ailes du profilé en U intérieur (2), et **en ce que** les développements arrière, correspondants, des bosses rentrantes (5) ou des développements d'estampage, réalisés sur les ailes du profilé en U qui, ensuite, est enfiché extérieurement sur le profilé intérieur (2), s'engagent dans les bosses rentrantes (5, 5a) ou les développements d'estampage prévues sur les bras (3).

9. Système de liaison selon la revendication 8, **caractérisé en ce que** le bord le plus extérieur (4) des bras (3) est coudé à 90° ou plié à 180°, de manière que, entre les branches, reste libre un intervalle correspondant au moins à l'épaisseur de paroi des profilés (1, 2), pour pouvoir être accroché, respectivement mis en appui au dos (7) des dents, des ondulations, sur les saillies ou dans les entailles, respectivement dans les passages prévus le long du bord d'aile du profilé intérieur (2) ou, le cas échéant, du profilé extérieur (1).

10. Système de liaison selon la revendication 8, **caractérisé en ce que** le développement (5a) ménagé sur les bras (3) en saillie, sur un côté ou sur les deux côtés, présente une entaille ou un siège (5b), s'étendant parallèlement ou de façon légèrement inclinée par rapport à l'axe longitudinal du profilé (2) pour, ainsi, pouvoir s'encliqueter sur la paroi d'aile, en étant accroché dans le perçage (6).

11. Système de liaison selon la revendication 8, **caractérisé en ce que** la liaison d'un profilé (1y) , à un élément structurel, formé par assemblage de deux profilés (1, 2), s'effectue au moyen de l'âme du profilé (1y) qui, sur la zone qui entoure l'élément structurel, ne présente aucune aile et dont les ailes sont insérées sur un tronçon de profilé, entre les ailes se trouvant sur le deuxième tronçon profilé (1y), sachant que les développements arrière des bosses rentrantes (5) des ailes extérieures s'engagent dans les bosses rentrantes des ailes intérieures, pour maintenir assemblés les deux tronçons de profilé (1y), et les développements arrière des bosses rentrantes (5) se trouvant sur le tronçon sans aile pénètrent dans les bosses rentrantes (5) correspondantes, se trouvant sur l'élément structurel.

12. Système de liaison selon la revendication 8, **caractérisé en ce que** la liaison entre des profilés (1, 2) identiques ou différents, ou entre des éléments structurels (M, C, D), orientés suivant leur axe longitudinal ou en appui parallèlement les uns aux autres, s'effectue par enfichage d'un profilé en U (1, respectivement 1x), présentant des éléments de pince (5).

13. Système de liaison selon la revendication 7 et liaison selon la revendication 8, **caractérisés en ce que**, intérieurement, entre les profilés (1, 2; 1y) et/ou sur les zones de liaison, axialement ou bien avant assemblage, latéralement, sont insérés des profilés tubulaires ou des profilés à section transversale ouverte, qui forment un renforcement des éléments structurels et/ou un reposoir pour les éléments de pince (5).

14. Système de liaison selon les revendications 7 à 13 précédentes, **caractérisé en ce que**, entre la face extérieure de l'âme du profilé en U (2) intérieur, muni de dents, qui fait partie de l'élément structurel vertical (M), et la face frontale des ailes qui forment la paroi supérieure de l'élément structurel (C) horizontal, pouvant être accroché sur l'élément structurel (M) vertical, est prévu un jeu qui permet un pivotement vers le haut de l'élément structurel horizontal (C), ceci d'un angle légèrement supérieur à celui du dos des dents (7), et **en ce que**, dans le cas où l'on prévoit un espacement correspondant, entre ladite face extérieure sur l'extérieur structurel vertical (M) et lesdites faces frontales, des éléments structurels (D) horizontaux peuvent être accrochés (A) ou insérés (B) sur les parois verticales des profilés (1, 2) qui forment le premier élément structurel (C) horizontal.
